# EUROPEAN PATENT APPLICATION

(11) **EP 4 837 681 A1**
(43) Date of publication of application: **11.11.2026**
(21) Application number: 25736287.1
(22) Date of filing: 03.01.2025
(51) Int. Cl.: B23D 36/00, B23Q 17/24, B23D 21/00, B23D 29/00

(54) **PIPE-TO-BE-REMOVED IDENTIFICATION DEVICE ENABLING EXTERNAL IDENTIFICATION, PIPE SELECTION METHOD, AND PIPE REMOVAL METHOD FOR PREVENTING ERRONEOUS CUTTING ACCIDENT BY USING SAME**

(30) Priority: 04.01.2024 KR 20240001281; 11.10.2024 KR 20240138108
(71) Applicant: Dcseng Co., Ltd., Cheongju-si, Chungcheongbuk-do 28214 (KR)
(72) Inventor: CHOI, Insung, Daejeon 34035 (KR)
(74) Representative: Kraus & Lederer PartGmbB
(86) International application number: PCT/KR2025/000120
(87) International publication number: WO 2025/147133

(57) **Abstract**

The present disclosure relates to a pipe selection method and a pipe removal method using same, a pipe-to-be-removed identification device and a target pipe removal method using same, and a magnetic core insertion method, through which pipe external identification and data identification are carried out together such that an operation is carried out after identifying a pipe and thus an erroneous cutting accident of the pipe can be fundamentally prevented. More specifically, the present disclosure may comprise: a pipe identification method enabling external identification, the method separating the front and rear ends of a pipe to be removed, inserting a magnetic core into the pipe to be removed, and then using a magnetic force measuring device for sensing a magnetic force, so as to measure the magnetic force of the pipe from the outside of the pipe so that the pipe to be removed is identified; and a pipe removal method for preventing an erroneous cutting accident, the method using a magnetic sensor for sensing the magnetic force, provided in a cutting machine for cutting the corresponding pipe to be removed, so as to sense the magnetic force of the pipe to be removed and identify the pipe to be removed, such that a cutting part cuts the pipe to be removed.

## Description

### [Technical Field]

The present disclosure relates to a pipe-to-be-removed identification device enabling external identification and a pipe removal method for preventing an erroneous cutting accident by using the same, and more particularly, to a pipe selection device and a pipe removal method capable of easily identifying a pipe to be removed from the outside and preventing an erroneous cutting accident when removing a specific pipe according to the purpose in a pipeline system supplying various types of fluids.

### [Background Art]

Representative fluids used in semiconductor, display, and various manufacturing processes are supplied according to specific applications of products being produced. Even a very common liquid like water (H₂O) may cause massive production problems when not supplied to the process. Furthermore, hazardous gases that are highly harmful to the human body and may cause safety accidents even with a small leak may also be included. Since pipeline systems supplying fluids in semiconductor and display manufacturing processes may have different pipes depending on the type and quantity of fluids used and the supply location, the pipeline systems form countless pipelines to supply fluids to each piece of equipment.

In addition, the type, location, or the like of fluids supplied by the pipeline system may change frequently according to the purpose of use, such as relocation and modification of equipment. Consequently, situations requiring the removal of specific pipes occur frequently. In this case, removing pipes containing dangerous gases or fluids currently in use may cause massive casualties or property damage due to gas leaks. Therefore, removal shall be carried out after segregating fluids according to their type and intended use, and shall be performed strictly in accordance with the removal manual. In particular, it is important to thoroughly identify the pipes to be removed, and reconfirmation is required even for the identified pipes. In complex operation situations, it is essential to repeatedly confirm that the target pipe has been correctly identified for removal before any cutting is performed, thereby preventing erroneous cutting accidents.

Conventionally, the pipeline systems include numerous pipes, and pipes installed over long periods are configured in increasingly complex forms, resulting in irregular lengths and shapes for each pipe supplied. There are limitations to making all constructed pipes distinguishable, and there are significant challenges in selecting pipes to be removed in highly complex operation situations. Furthermore, since pipes may pass through various walls and ducts, it is difficult to select pipes to be removed among the pipes in a line, and problems exist such as double errors occurring during the re-confirmation of selected pipes or accidental erroneous cutting accidents occurring during removal even when pipes have been correctly selected.

Since even a small amount of gas leak caused by a single mistake may lead to fatal accidents to the human body, a method is required to fundamentally prevent any errors that may occur during the removal process.

### [Disclosure]

### [Technical Problem]

The present disclosure was devised to solve the problems described above, and the object of the present disclosure provides a pipe selection device and a pipe removal method that can easily identify a pipe to be cut from the outside, thereby easily and more accurately selecting pipes during removal operation, and can resolve the problems of human error or wasted manpower by minimizing a repetitive selection process, and fundamentally preventing erroneous cutting accidents of pipes by performing both external identification and data identification of the pipe to perfectly identify the pipe to be removed and then performing the removal operation.

In addition, the present disclosure provides a pipe-to-be-removed identification device that allows a pipe to be cut to be easily identified from the outside, thereby enabling quick and easy selection of the pipe during a removal operation, performs a repetitive operation even on a long pipe, thereby facilitating selection of the pipe to be removed, performs the removal operation of cutting the pipe to be removed by using the same, thereby improving the accuracy of the pipe removal operation, and provides operation convenience during the process of inserting a magnetic core into the pipe to be removed by using the same.

### [Technical Solution]

In one general aspect, a pipe selection method for identifying and selecting a pipe to be removed from among a plurality of pipes from an outside includes: A) separating front and rear ends of the pipe to be removed and inserting a magnetic core into the pipe to be removed; and B) identifying the pipe to be removed by measuring a magnetic force of the pipe from the outside using a magnetic force measuring device that senses the magnetic force, and a pipe removal method for the pipe to be removed selected by the pipe selection method includes: a) confirming the pipe to be removed by sensing the magnetic force of the pipe and confirming the magnetic core using a cutting machine including a cutting part arranged at one end to cut the pipe and a magnetic sensor arranged on the cutting part side to measure the magnetic force; b) when the magnetic force sensed by the cutting machine is valid, turning on power to the cutting part of the cutting machine that cuts the pipe; and c) cutting, by the cutting part, the pipe to be removed, in which the cutting machine is initially set to an off state such that the cutting part is not operated, and when it is sensed that a magnetic force value sensed by the magnetic sensor is equal to or greater than a predetermined level, the cutting part is switched to an on state and the cutting part is operated.

The pipe selection method and pipe removal method may further include: B-1) when the pipe to be removed is identified in B), storing corresponding pipe information in the magnetic force measuring device, generating a barcode corresponding to the stored pipe information and printing the barcode as a sticker, and then attaching the sticker to the pipe to be removed.

In A), the magnetic core may be inserted by connecting a guide line to one end portion of the magnetic core and using a wire feeder to insert the guide line into a pipe to be removed and pull the magnetic core.

In A), the magnetic core feeder that includes an elastic pig ball formed to have a diameter corresponding to an inner diameter of the pipe and a guide line connected to the magnetic core coupled to a rear end of the pig ball may be inserted from one end of the pipe, and a compressed fluid may be supplied from the one end of the pipe so that the pig ball moves along the pipe and then the guide line connected to the pig ball may pull the magnetic core, thereby inserting the magnetic core into the pipe.

The magnetic core may include: a central portion that forms a length according to at least the length of the pipe; and a plurality of magnetic units that have a predetermined length and are coupled to an outer diameter of the central portion, and the plurality of magnetic units may be spaced apart at a predetermined interval on the central portion.

The magnetic force measuring device may include: a probe that measures the magnetic force of the magnetic core from the outside of the pipe; and a first processor that converts the magnetic force measured by the probe into data, stores and manages the data, and generates the data into a barcode.

In a), when the magnetic force sensed by the cutting machine is not valid, the pipe to be removed may be identified using a magnetic force measuring device on the outside of the pipe.

In a), when the sensed magnetic force value of the magnetic sensor is less than a certain level, the power of the cutting part may remain turned off.

The pipe selection method and pipe removal method may further include: a-0), prior to a), confirming a barcode on a sticker attached to the outside of the pipe to be removed by allowing a scanner to recognize information on the pipe to be removed.

In a-0), when the barcode information recognized by the scanner and the information on the pipe to be removed are valid, a) may be performed, and when the barcode information recognized by the scanner and the information on the pipe to be removed are invalid, re-selecting the pipe to be removed from the outside may be performed.

The cutting machine may further include: a scanner that scans a barcode; and second processor that converts the magnetic force measured by the magnetic sensor and the information on the barcode scanned by the scanner into data, stores and manages the data, and compares and determines the received information.

In another general aspect, a pipe-to-be-removed identification device that senses a magnetic force of a magnetic core inserted into a pipe to be removed and identifies the pipe to be removed from the outside includes: a sensing unit that is arranged at one end and formed such that at least an inner circumferential surface corresponds to an outer circumferential surface of the pipe and is fastened to the pipe; an opening and closing means that selectively opens or closes the sensing unit; and a body part having the sensing unit on one side, in which the sensing unit is provided with a plurality of magnetic sensors that sense a specific magnetic force of the magnetic core and are arranged in parallel along an inner circumferential surface.

The sensing unit may include a first sensing unit and a second sensing unit each having an inner circumferential surface formed as a semicircle and arranged facing each other, and the inner circumferential surface may be formed in a circular shape along an outer circumferential surface of the pipe.

The opening and closing means may be a clamp type that opens or closes the space between the first sensing unit and the second sensing unit by pressing or not pressing a handle that protrudes a predetermined distance from the body part.

The sensing unit may be replaceable from the body part.

The magnetic sensor may include a Hall sensor with a north pole and a south pole, and the north pole and the south pole may be arranged parallel to each other along a radial direction of the sensing unit.

The plurality of magnetic sensors may be arranged such that the north pole and the south pole alternately are arranged on an inner circumferential surface side of the sensing unit.

The sensing unit may be configured to have an inner circumferential surface made of at least one material having a low coefficient of friction among Teflon (PTFE), plastic, nylon, and glass fiber reinforced plastic (FRP), so that the sensing unit moves along the outer circumferential surface of the pipe.

The sensing unit may have at least one roller or bearing arranged along the inner circumferential surface so that the sensing unit moves on the outer circumferential surface of the pipe.

In another general aspect, there is provided a target pipe removal method using the pipe-to-be-removed identification device, in which the pipe-to-be-removed identification device is connected to a cutting machine that cuts the pipe to be removed so as to transmit and receive a signal, and when the magnetic sensor of the pipe-to-be-removed identification device senses the pipe to be removed, the pipe-to-be-removed identification device transmits an operation signal to the cutting machine so that the cutting machine is turned on.

In another general aspect, there is provided a target pipe removal method using the pipe-to-be-removed identification device, in which the pipe-to-be-removed identification device is connected to a cutting machine that cuts the pipe to be removed so as to transmit and receive a signal, and the pipe-to-be-removed identification device generates positional information and transmits the positional information to the cutting machine, and when the cutting machine feeds back the positional information received from the pipe-to-be-removed identification device, the cutting machine is turned on.

In another general aspect, there is provided a magnetic core insertion method using the pipe-to-be-removed identification device, in which the pipe-to-be-removed identification device is linked to a motor of a magnetic core insertion device that inserts a magnetic core into the pipe to be removed, and when a sensing unit of the pipe-to-be-removed identification device is installed at an outlet of the magnetic core insertion device through which the magnetic core is extracted, the magnetic sensor senses a magnetic force of the magnetic core extracted from the outlet and calculates a length of the magnetic core.

The pipe-to-be-removed identification device may include a display in the body part that outputs the length of the magnetic core to the outside, and when an insertion length of the magnetic core output to the display reaches a preset length, a motor power of the magnetic core insertion device may be stopped.

### [Advantageous Effects]

According to a pipe selection device and pipe removal method of the present disclosure according to the above configuration, by accurately selecting pipes during removal operations and enabling easy external identification, it is possible to eliminate the need for double selection, thereby simplifying the process and preventing potential human errors, simplifying the operation process to prevent additional human errors in advance, and reducing labor costs associated with unnecessary manpower input, and shortening removal time and improving operation productivity, and by performing the operation after double detection through accurate external identification of the pipe to be removed and data identification of the target pipe, it is possible to prevent erroneous cutting accidents, thereby providing a stable operation process that can fundamentally block errors that may occur during the removal process.

A pipe-to-be-removed identification device of the present disclosure can simplify a removal operation in a pipe removal operation to improve operation productivity, insert a magnetic core into a pipe to be removed to easily identify the pipe to be removed from the outside, can be applied throughout the entire removal process, including the cutting operation for the target pipe, and thus has a wide range of applicability, enabling repetitive confirmation during the removal operation even for long pipes, and provide an operation process capable of preventing additional human errors in advance while also preventing an erroneous cutting accident.

### [BRIEF DESCRIPTION OF THE DRAWINGS]

FIG. 1 is a conceptual diagram of a pipe selection device according to an embodiment and a pipe removal method using the same.
FIG. 2 is a configuration diagram of a pipe selection device according to an embodiment.
FIG. 3 is Example 1 of a magnetic core inserted into a pipe.
FIG. 4 is Example 2 of the magnetic core inserted into the pipe.
FIG. 5 is Example 3 of the magnetic core inserted into the pipe.
FIG. 6 is a configuration diagram of a feeder for inserting the magnetic core according to an embodiment.
FIG. 7 is a configuration diagram of a feeder for inserting a magnetic core according to another embodiment.
FIG. 8 is a flowchart 1 of a pipe selection method according to an embodiment.
FIG. 9 is a flowchart 2 of the pipe selection method according to an embodiment.
FIG. 10 is a flowchart of a pipe removal method according to an embodiment.
FIG. 11 is a conceptual diagram of a pipe-to-be-removed identification device of the present disclosure.
FIG. 12 is an overall configuration diagram 1 of the pipe-to-be-removed identification device according to an embodiment.
FIG. 13 is an overall configuration diagram 2 of the pipe-to-be-removed identification device according to an embodiment.
FIG. 14 is an overall configuration diagram 3 of the pipe-to-be-removed identification device according to an embodiment.
FIG. 15 is a configuration diagram of a magnetic sensor arranged in a sensing unit according to an embodiment.
FIG. 16 is a conceptual diagram of the pipe-to-be-removed identification device according to an embodiment and a cutting machine linked thereto.
FIG. 17 shows a conceptual diagram of the pipe-to-be-removed identification device according to an embodiment and a magnetic core insertion device linked thereto.

### [Best Mode]

Hereinafter, a technical idea of the present disclosure will be described in more detail with reference to the accompanying drawings. Terms and words used in the present specification and claims are not to be construed as a general or dictionary meaning, but are to be construed as meaning and concepts meeting the technical ideas of the present disclosure based on a principle that the present inventors may appropriately define the concepts of terms in order to describe their inventions in best mode.

Therefore, configurations described in exemplary embodiments and the accompanying drawings of the present invention do not represent all of the technical spirits of the present invention, but are merely most preferable embodiments. Therefore, the present invention should be construed as including all the changes, and substitutions included in the spirit and scope of the present invention at the time of filing this application.

Hereinafter, a technical idea of the present disclosure will be described in more detail with reference to the accompanying drawings. The accompanying drawings are only examples shown in order to describe the technical idea of the present invention in more detail. Therefore, the technical idea of the present invention is not limited to shapes of the accompanying drawings.

The present disclosure provides a pipe removal process that enables safe and easy pipe removal while fundamentally preventing errors that may occur during a removal process. A pipeline system includes a plurality of pipes (tubes) 10. The plurality of pipes 10 may extend to different lengths, extend to different positions, or intersect each other, and may be provided by passing through various walls and air ducts. Accordingly, conventionally, a pipe to be removed was checked and the checked line was reconfirmed repeatedly to select the pipe to be removed. However, the present disclosure is characterized by being able to replace the process of selecting the pipe 10 with a process of inserting a magnetic core 100 into a removal pipe 11. Accordingly, selecting a separate removal line is not required, and double selection are eliminated. As a result, the removal time and process are shortened, labor costs are reduced, and a more stable removal process may be performed. The present disclosure is characterized by including a pipe selection device enabling external identification and a pipe removal method for preventing an erroneous cutting accident by using the same.

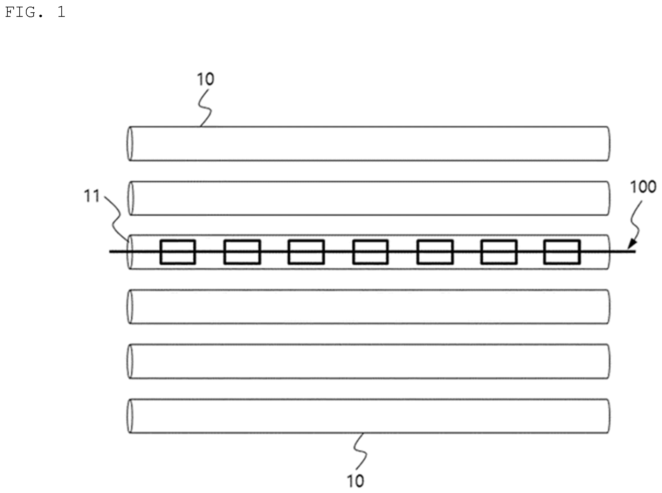

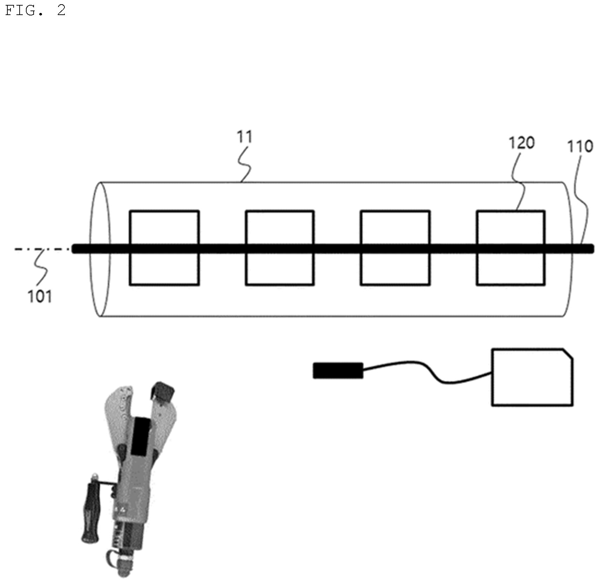

As illustrated in FIG. 1, the present disclosure is characterized in that the pipe removal process is performed by inserting the magnetic core 100 into the pipe to be removed 11 among the plurality of pipes 10, identifying the pipe to be removed 11 by measuring the magnetic force of the inserted magnetic core 100 from outside the pipe 11 using a magnetic force measuring device 200, and cutting the identified pipe 11 with a cutting machine 300 after the cutting machine 300 measures the magnetic force and then confirms the target pipe 11 before cutting. Accordingly, referring to FIG. 2, the pipe selection device of the present disclosure is characterized by being configured to include the magnetic core 100 inserted into the pipe 11, the magnetic force measuring device 200 that measures the magnetic force from outside the pipe 11, and the cutting machine 300 that includes a cutting part 310 that cuts the pipe 11 and a magnetic sensor 320 that measures the magnetic force.

The magnetic core 100 of the present disclosure is characterized by including a magnetic unit 120 that is inserted only into the pipe to be removed 11 to generate magnetic force. Furthermore, the magnetic core 100 of the present disclosure is characterized by including a central portion 110 that forms a length according to at least the length of the pipe to be removed 11, and the plurality of magnetic units 120 that have a predetermined length and are coupled to an outer diameter of the central portion 110.

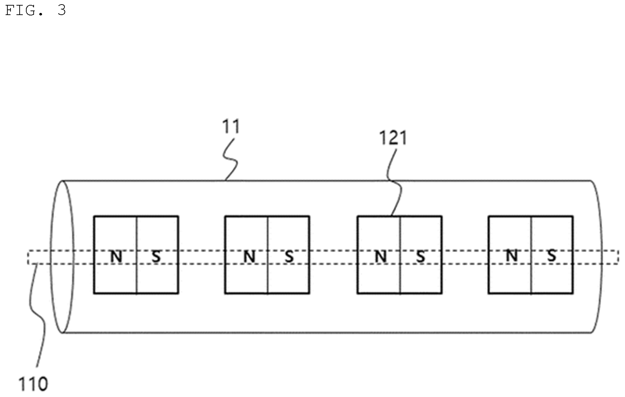

Referring to FIGS. 3 to 5, the central portion 110 is configured to be pulled so that the magnetic core 100 may be inserted into and installed within the pipe. The magnetic core 100 is inserted into the pipe to be removed 11 along the length thereof while the magnetic unit 120 is coupled to an outer diameter of the central portion 110. Accordingly, the central portion 110 is preferably formed to have a sufficient length such that the magnetic core 100 may be inserted throughout the entire length of the pipe to be removed 11. The central portion 110 may be formed without restrictions on shape or material as long as it may form a length. When there is a feeder that separately inserts the magnetic core 100 into the pipe, the central portion 110 may be formed from a flexible material. Alternatively, when there is no separate feeder, the central portion 110 may be formed from a rigid material to pull the magnetic unit 120. That is, when a guide line is formed integrally with the central portion 110, the material may be steel or steel wire. When the central portion 110 has a separate feeder, the material may be soft. The central portion 110 may be composed of a fine diameter such as a wire, or may have a constant diameter. When the central portion 110 is formed to have a constant diameter, it is preferable that the central portion 110 is formed with a diameter smaller than the diameter of the magnetic unit 120. In an embodiment of the present disclosure, the central portion 110 may be formed from steel wire, piano steel wire, nylon wire, etc.

Referring to FIGS. 3 to 5, the magnetic unit 120 is coupled to the outer diameter of the central portion 110 and is characterized by having a plurality of units spaced apart from each other on the central portion 110. The magnetic unit 120 is characterized by having a predetermined length and is spaced apart on the central portion 110 at a predetermined interval. The magnetic unit 120 may be manufactured to have a cylindrical or polygonal outer shape, and may be formed in any suitable shape without limitation, provided that the magnetic unit 120 may be easily moved within a pipe. In this case, the length of the magnetic unit 120 and the spacing distance between the magnetic units 120 may be selected as needed, depending on the working conditions, or considering the material of the central portion 110. However, it is preferable to secure a sufficient spacing distance to prevent the magnetic units 120 from sticking together.

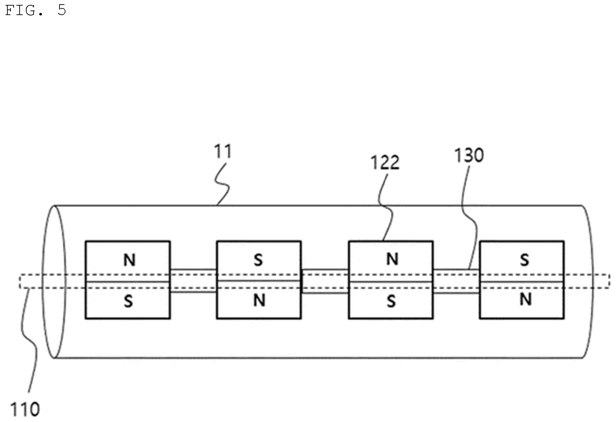

When necessary to prevent the magnetic units 120 from sticking together, as illustrated in FIG. 5, a spacing unit 130 may be further provided between the magnetic units 120 to maintain a spacing distance between the magnetic units 120 on the central portion 110. The spacing unit 130 is intended to maintain a constant spacing distance between adjacent magnetic units 120 and may be formed from a soft plastic tube. The spacing unit 130 may prevent the magnets from sticking to each other and secure a sufficient spacing distance between the magnets.

The magnetic unit 120 may be used without limitation as long as it is a magnetic material that generates magnetic force. In this case, it is preferable that the diameter of the magnetic unit 120 is formed smaller than the diameter of the pipe so that the magnetic unit 120 may be easily inserted and guided along the central portion 110 within the pipe. Since the magnetic unit 120 should be able to sense a magnetic force of a certain strength or greater from the outside of the pipe, it is preferable that the magnetic unit 120 is formed from a magnetic material that generates a magnetic force of a certain strength or greater. In this case, when the magnetic unit 120 is made of a material having a relatively weak magnetic force, it is preferable that the magnetic unit 120 is formed with a larger diameter so as to generate a magnetic force equal to or greater than a predetermined level. In addition, when the magnetic unit 120 is made of a material with a stronger magnetic force, it may be formed with a smaller diameter. In an embodiment of the present disclosure, the magnetic unit 120 may be a neodymium magnet.

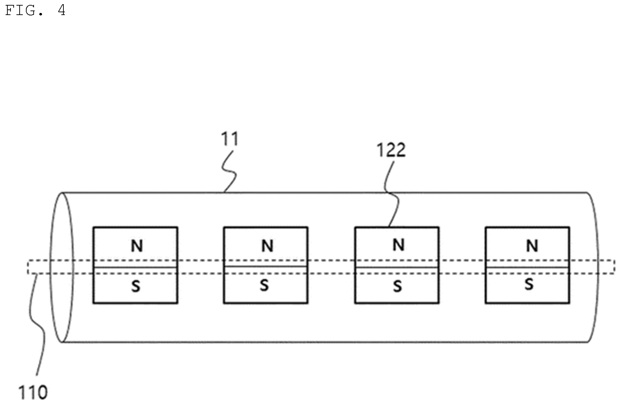

Furthermore, the magnetic unit 120 of the present disclosure may be configured to have polarities distinguished into a north pole and a south pole. That is, the magnetic unit 120 of the present disclosure may generate magnetic force by the spin of an atomic nucleus. Therefore, the magnetic unit 120 may be configured in a form in which the north pole portion and the south pole portion are distinguished. In this case, as illustrated in FIG. 3, the magnetic unit 120 may be in a form 121 in which the N pole and the S pole are arranged horizontally along the longitudinal direction of the central portion 110. That is, the magnetic unit may be a horizontal type (Example 1) in which the N pole and the S pole are arranged horizontally. The horizontal magnetic unit 121 has the advantage of facilitating the arrangement of polarities when a plurality of magnetic units are arranged on the central portion 110, thereby allowing the magnetic units to be easily arranged while more accurately maintaining spacing therebetween. In addition, as illustrated in FIG. 4 and 5, the magnetic unit may be in a form (Example 2) in which the N pole and the S pole are arranged perpendicularly to each other in a direction perpendicular to the longitudinal direction of the central portion 110. That is, the magnetic unit 120 may be a vertical type 122 in which the N pole and the S pole are arranged perpendicularly. When the vertical magnetic unit 122 is arranged in the central portion 110, it may be difficult to achieve an accurate polarity arrangement. However, after a plurality of magnetic units are arranged on the central portion 110, the vertical magnetic unit 122 has the advantage that, at a predetermined distance therefrom, a greater magnetic force is detected as compared with a magnetic unit having the same area, thereby facilitating detection of magnetic force from outside the pipe. Also, as illustrated in FIG. 5, the vertical magnetic units 122 may be arranged so that they are aligned along the length of the central portion 110 and the polarities of adjacent magnetic units are alternately positioned differently (Example 3). That is, In the vertical magnetic unit 122, when the plurality of magnetic units are arranged side by side on the central portion 110, the magnetic unit adjacent in the longitudinal direction to a magnetic unit having its N pole positioned upward may have its S pole positioned upward, and a magnetic unit adjacent thereto may have its N pole positioned upward, such that the polarities positioned on the upper side may be alternately arranged as N poles and S poles. Accordingly, the arrangement of the magnetic units in the central portion 110 may be performed more easily while improving the amount of magnetic force detected.

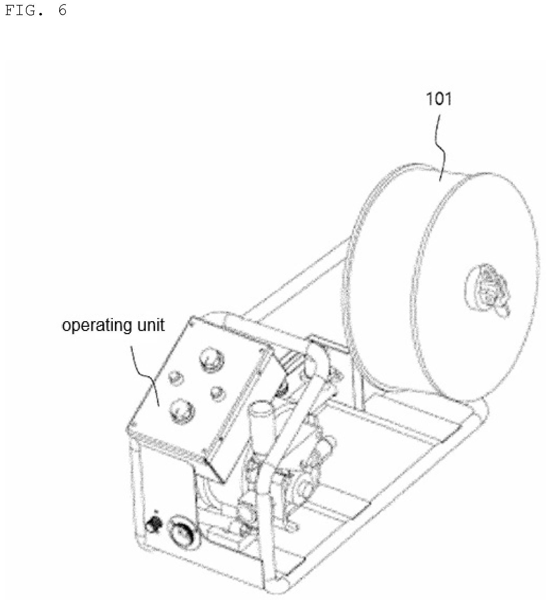

In this case, the present disclosure may include a feeder for inserting the magnetic core 100 into the pipe 11. The feeder may be formed in the shape of a gear connected to one end of the central portion 110, which is a guide line 101, so that the guide line 101 connected by the gear moves inside the pipe, thereby moving the guide line 101 so that the magnetic core 100 is pulled and inserted into the pipe 11. In this case, referring to FIG. 6, the feeder may be a wire feeder, and the wire feeder may be used when the guide line is a steel wire. The wire feeder is characterized by inserting the guide line into the pipe, connecting the end of the inserted guide line to the end of the magnetic core, and pulling the guide line out, and pulling the magnetic core into the pipe. The wire feeder may control the speed through an operating unit that feeds the guide line 101 into the pipe, and may include a function to advance the guide line 101 to insert the guide line 101 or to retract the guide line 101 to pull the guide line 101.

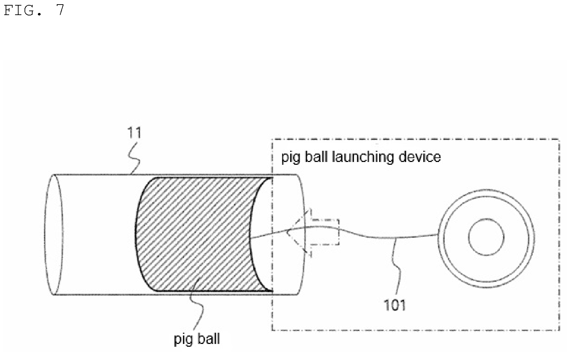

Additionally, referring to FIG. 7, the feeder may be formed in a launcher form, and the guide line may be a nylon line. The launcher-type feeder may include a pig ball made of an elastic material and having a diameter corresponding to the inner diameter of the pipe 11, wherein a guide line 101 connected to the magnetic core 100 is coupled to a rear end of the pig ball, and the pig ball may be inserted first into one end of the pipe 11. Subsequently, when a pig ball launching device that supplies compressed fluid into the pipe 11 supplies compressed fluid, such as air or nitrogen, at one end of the pipe 11, the pig ball moves in the other direction, and the guide line 101 moves along the direction of movement of the pig ball, and the magnetic core 100 connected to the guide line 101 may be inserted into the pipe 11. In addition, the feeder may be formed in various ways without limitation as long as it is capable of inserting the magnetic core 100 into the pipe 11.

The magnetic force measuring device 200 of the present disclosure is a device that measures magnetic force using a probe 210 from the outside of the pipe 11. The above magnetic force measuring device 200 is intended to sense the magnetic force of the magnetic core 100 inserted inside the pipe to be removed 11. Depending on the magnetic force formed by the magnetic core 100, when magnetic force strength greater than certain reference strength is sensed outside the pipe, the pipe may be identified as the pipe to be removed 11. The magnetic force measuring device 200 may be used without limitation as long as it is capable of measuring magnetic force, and may be configured as a Gaussian meter and may be formed to be portable.

Referring to FIG. 2, the magnetic force measuring device 200 may include the probe 210 for measuring the magnetic force of the magnetic core 100 and a first processor that converts and stores information on the magnetic force measured by the probe 210 or information on the pipe into data. The first processor may analyze and determine whether the magnetic force measured by the probe 210 from a pipe is the magnetic force of the pipe to be removed 11 into which the magnetic core 100 is inserted, and may display, to the operator, information indicating whether the pipe from which the magnetic force is measured is the pipe to be removed 11, thereby enabling the operator to identify the pipe to be removed 11. That is, the magnetic force measuring device 200 is a device that may identify externally which a pipe among a plurality of pipes 10 is the pipe to be removed 11. Furthermore, the first processor may convert information on a pipe for which a magnetic force has been measured into data, and may store and manage the data regarding the pipe. The first processor may further generate data including information on the measured magnetic force, information on the pipe, and information on the pipe to be removed 11 previously included, and may transmit and receive signals to and from an external device. In addition, the first processor may select specific information on a pipe and generate a barcode so that the selected information may be easily read externally. For example, when the magnetic force measuring device 200 measures a magnetic force of a pipe from outside the pipe using the probe 210 with respect to a pipe expected by the magnetic force measuring device 200 to be the pipe to be removed, the first processor receives the measured magnetic force value, compares the measured magnetic force value with a reference magnetic force value of the magnetic core 100 that has been previously input, and determines whether the pipe is the pipe to be removed 11 into which the magnetic core 100 is inserted. In this case, the first processor may separately group and store the select record along with the information of the pipe and generate a barcode for this information. The barcode generated by the first processor may be printed in the form of a sticker through a barcode printer and the sticker may be attached to the outside of the pipe so as to be identifiable. The barcode printer may be configured as an integral unit with the magnetic force measuring device 200 or may be connected via wired or wireless connection.

Referring to FIG. 2, the cutting machine 300 of the present disclosure is a device for cutting the pipe to be removed 11. The cutting machine 300 may include the cutting part 310 that is positioned at one end to cut the pipe and the magnetic sensor 320 that measures the magnetic force. The cutting part 310 is configured to directly cut the pipe and may be formed without limitation, such as rechargeable, hydraulic, or electric, as long as it is configured as a means capable of cutting the pipe regardless of the type and material of the pipe. Furthermore, the cutting machine 300 is characterized in that the cutting part 310 and the magnetic sensor 320 are configured as an integrated unit. The magnetic sensor 320 is characterized as a sensor capable of measuring the magnetic force of the magnetic core 100 from the outside of the pipe, such as the probe 210 of the magnetic force measuring device 200. The magnetic sensor 320 is provided to finally confirm whether the pipe is to be removed 11 before performing a cutting operation on the identified pipe using the cutting machine 300. That is, the magnetic sensor 320 may measure the magnetic force of the magnetic core 100 inserted inside the pipe to be removed 11. In this case, the magnetic sensor 320 may be the same as or different from the probe 210 of the magnetic force measuring device 200. The magnetic sensor 320 may be provided without positional restrictions within the cutting machine 300 as long as the magnetic sensor 320 is positioned such that the magnetic sensor 320 may measure a magnetic force at a predetermined distance from the pipe, and may be arranged on the side of the cutting part 310 or at any edge portion of the cutting machine 300.

The cutting machine 300 of the present disclosure is characterized by having a separate power supply for the operation of the cutting part 310. That is, the cutting machine 300 itself has a power supply, and the cutting part 310 also has a power supply, so that the operation of cutting the pipe may be turned on/off. In this case, the cutting part 310 includes a second processor, and the second processor may turn the power of the cutting part 310 on/off. The second processor may convert magnetic force information measured by the magnetic sensor 320 into data, store and manage the data corresponding to the magnetic force information, and compare and determine the received information. The second processor is characterized by turning the power of the cutting part 310 on or off based on the magnetic force information received from the magnetic sensor 320. That is, when the magnetic force measured through the magnetic sensor 320 is greater than or equal to a certain value, the second processor may turn on the power of the cutting part 310 so that the cutting part 310 cuts the pipe. Conversely, when the magnetic force measured by the magnetic sensor 320 is less than a certain value, the second processor may keep the power of the cutting part 310 off and limit the cutting of the pipe by the cutting machine.

In addition, the cutting machine 300 may further include a scanner that scans a barcode. The scanner may be integrated with the cutting machine 300 or may be connected via wired or wireless connection. This allows the pipe to be removed 11 to be identified by the magnetic force measuring device 200, and when a barcode containing information on the pipe to be removed 11 is generated and attached to the outside of the pipe in the form of a sticker, the cutting machine 300 may easily confirm that the pipe is to be removed 11 by scanning the barcode using the scanner before cutting the pipe. In this case, the scanner transmits and receives information to and from the second processor, and when the second processor determines that the information of the barcode scanned by the scanner is the "pipe to be removed" 11, the scanner may turn on the power of the cutting machine 300. The second processor may convert the information received through the scanner into data, store and manage the data, and manage the data together with the magnetic force measured by the magnetic sensor 320.

The fluid supply and recovery system may be composed of numerous pipes 10 intertwined to form different flow paths, and may be arranged to pass through various walls and air ducts depending on the structure of the factory. In addition, the fluid supplied by the pipe 10 may be toxic to the human body or a dangerous gas that causes facility accidents. In this case, the specific pipe 11 may be removed depending on the purpose. Since partial removal of pipes constituting the supply system is an essential process when production equipment is modified, replaced, or relocated, a pipe removal operation is generally performed by cutting the pipe at predetermined intervals according to the length of the pipe during the removal process. Accordingly, in order to safely perform the removal work, it is very important to accurately distinguish the pipe 11 selected for removal. However, since the pipe 10 provided in the fluid supply and recovery system is difficult to distinguish based on its external appearance, considerable time is required to distinguish and identify the pipe to be removed 11. In addition, because a worker should individually verify each pipe, unnecessary manpower is required and the risk associated with the operation is increased.

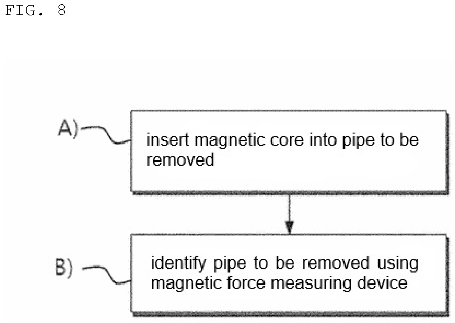

The present disclosure is intended to solve this problem and includes a pipe selection method enabling external identification by using an externally identifiable pipe selection device. In this case, the pipe selection device may include the magnetic core 100 having the above-mentioned features, the magnetic force measuring device 200, and the cutting machine 300. Accordingly, referring to FIG. 8, the pipe selection method of the present disclosure is characterized by including: step A) separating front and rear ends of the pipe to be removed and inserting a magnetic core into the pipe to be removed; and step B) identifying the pipe to be removed by measuring a magnetic force of the pipe from the outside using a magnetic force measuring device that senses the magnetic force.

More specifically, the pipe selection method may determine whether a pipe is to be removed according to the purpose of the fluid supply and recovery system. When removal of a specific pipe is determined, the pipe is classified as pipe to be removed 11, and a removal plan, including a timing of work and a method of work, may be established by reviewing a removal method for pipe 11. In addition, during the removal operation, the front and rear ends of the pipe to be removed 11 are already known, and a process to exhaust any remaining fluid inside the pipe 11 may be performed before the full removal operation. In this case, the remaining fluid inside the pipe 11 may be checked by adding a harmless fluid at one end of the pipe 11 and detecting a harmful substance at the other end.

When it is confirmed that the inside of the pipe to be removed 11 has been cleaned, the front and rear ends of the pipe 11 may be separated and prepared. Then, the type of magnetic core 100 may be selected depending on the removal plan or the site conditions. In this case, the type of magnetic core 100 may be determined by the induction method depending on the type of feeder, or selected by considering the length of the pipe, the diameter of the pipe, etc. The magnetic core 100 may be selected by combining the type of central portion 110, the arrangement form of the magnetic unit 120 (vertical type, horizontal type), the presence of the spacing unit 130, the presence of the guide line 101, etc.

Referring to FIG. 7, step A) may be performed by inserting the magnetic core 100 into the pipe to be removed 11 according to the selected magnetic core 100 and the induction method. The detailed insertion method of step A) may be selected in various ways depending on the type of feeder, magnetic core 100, and guide line 101. For example, the magnetic core 100 may be inserted by pulling the magnetic core 100 after steel wire induction, or may be inserted by a pig ball launching method. More specifically, in step A), the magnetic core may be inserted by connecting the guide line to one end portion of the magnetic core and using the wire feeder to insert the guide line into the pipe to be removed and pulling the magnetic core. Alternatively, in step A), the magnetic core may be inserted by using a launch-type feeder, whereby the pig ball is inserted into the pipe and connected to the guide line of the magnetic core, and the guide line connected to the pig ball pulls the magnetic core by supplying the compressed fluid into the pipe. In this case, it is preferable that the magnetic core 100 inserted into the pipe 11 is inserted entirely from one end portion to the other end of the pipe 11 to be cut. Alternatively, when the length of pipe 11 to be cut is too long to allow the insertion of the magnetic core, the removal may be performed by repeating a process in which the magnetic core is inserted to an appropriate length, the magnetic core is used for removal, and, at a last portion where the removal is performed, the magnetic core is inserted again to perform the removal.

Referring to FIG. 7, step B) may be performed by using the magnetic force measuring device 200 to measure the magnetic force of the pipe from the outside of the pipe expected to be removed. In this case, in step A), the outside of pipe 11 into which magnetic core 100 is inserted may be marked, and step B) may be performed on the pipe 11 marked in step A) based on the marking applied to pipe 11. In step B), the magnetic force is measured at the outer diameter of the pipe using the probe 210 of the magnetic force measuring device 200, and the pipe to be removed 11 may be identified by the first processor analyzing whether the measured magnetic force corresponds to the magnetic core inserted into the pipe to be removed 11. In this case, the first processor includes information on a certain standard range for the magnetic force value of the magnetic core 100, and when the magnetic force value received from the probe 210 is within the standard range, it may be determined that the pipe is the pipe to be removed 11.

In this case, referring to FIG. 8, when the pipe to be removed 11 is identified by confirming that the pipe corresponds to the pipe to be removed 11, the magnetic force measuring device 200 stores the information on the pipe through the first processor, generates a barcode together with the measured magnetic force information, and outputs the barcode in the form of a sticker through an output device. An operator may perform step B-1) of attaching the sticker to the outside of the pipe to be removed 11. Through step B-1), the pipe 11 to be worked on is marked so as to be identifiable from the outside, and at the same time, the operator may easily check work information at a work location by scanning the barcode.

The present disclosure includes a pipe removal method that prevents erroneous cutting accidents by using an externally identifiable pipe selection device. In this case, the pipe removal method may be performed on the pipe selected through the pipe selection method. That is, after identifying the pipe to be removed from the outside of the pipe using the magnetic force measuring device of the present disclosure, the pipe removal method may be performed on the pipe. Accordingly, in the pipe removal method of the present disclosure, the method may be performed by including: a) a step of detecting the magnetic force of the pipe to be removed 11 using the magnetic sensor 320 configured to sense magnetic force and provided in the cutting machine 300 for cutting the pipe equipped in the cutting machine 300 for cutting the pipe, and confirming the pipe to be removed 11; b) a step of turning on the power of the cutting part 310 for cutting the pipe 11 in the cutting machine 300 when the magnetic force detected by the cutting machine 300 is valid; and c) a step of the cutting part 310 cutting the pipe to be removed 11.

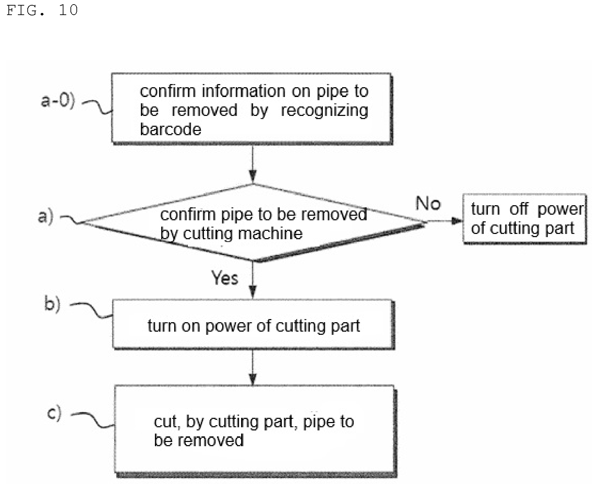

Referring to FIG. 10, when the pipe to be removed 11 is identified through the magnetic force measuring device 200, step a) may be performed to confirm the information of the pipe using the cutting machine 300 for cutting the pipe. Step a) is a step of confirming whether the pipe to be worked on is the pipe to be removed 11 before the cutting machine 300 cuts the pipe. In this case, the cutting part 310 of the cutting machine 300 is in a state where the power is off. Step a) is characterized by detecting the magnetic force of the pipe using the magnetic sensor 320 equipped in the cutting machine 300 to measure magnetic force, and receiving this information from the second processor to determine whether the magnetic force measured by the magnetic sensor 320 matches the magnetic force information of the magnetic core 100 inserted into the pipe to be removed 11. The second processor may include information within a certain standard range regarding the magnetic force value of the magnetic core 100 inserted into the pipe 11, and when the magnetic force value received from the magnetic sensor 320 is within the standard range, it may be confirmed that the pipe is indeed the pipe to be removed 11. Additionally, the second processor may compare and determine the magnetic force value measured by the magnetic sensor 320 of the cutting machine 300 with the magnetic force value measured by the probe 210 of the magnetic force measuring device 200. That is, regarding the pipe where the cutting machine 300 is positioned, the second processor confirms that the pipe to be removed 11 is valid when the magnetic force detected by the cutting machine 300 and the magnetic force value detected by the magnetic force measuring device 200 are valid. In this case, the magnetic force value being valid may be described as the magnetic force value detected by the magnetic force measuring device 200 being a certain level or more, that is, the sensed magnetic force value being greater than the reference magnetic force value.

In this case, prior to step a), step a-0) may be performed in step a), by recognizing the barcode attached to the outside of the pipe with a scanner to confirm the information of the pipe. In this case, the barcode may include the information on the removal operation of the pipe, and after the operator easily confirms the information, step a) may be performed to confirm that the pipe to be removed using a cutting machine. By scanning the barcode in step a-0), the removal operation may be performed accurately according to the work plan included in the barcode. In this case, when the barcode information recognized by the scanner in step a-0) matches the information on the pipe to be removed 11, the information on the pipe is determined to be valid, and step a) may be performed. Alternatively, when the barcode information recognized by the scanner in step a-0) does not match the information on the pipe to be removed 11, the information of the pipe is determined to be invalid, and the process may return to the step of identifying the pipe to be removed among the plurality of pipes from the outside, which may be the pipe identification step of the present disclosure. That is, when it is determined through the barcode in step a-0) that the corresponding pipe is not the pipe to be removed 11, step A) of the pipe identification step may be performed.

When, by step a), the magnetic force sensed by the cutting machine 300 is valid with the magnetic force of pipe to be removed 11, the second processor may perform step b) of turning on the power of the cutting part 310. That is, when the second processor confirms that the pipe where the cutting machine 300 is positioned is the pipe to be removed 11, the second processor may turn on the power of the cutting part 310 to complete the preparation for the removal operation. This may be the case where the second processor turns on the power of the cutting part 310 when the magnetic force value received from the magnetic sensor is a certain level or more.

Additionally, in step a) above, when the magnetic force detected by the cutting machine 300 is inconsistent with the magnetic force of the pipe to be removed 11, the second processor may keep the power of the cutting part 310 off. In this case, when the magnetic force sensed by the cutting machine is invalid, the pipe to be removed may be identified from the outside of the pipe using the magnetic force measuring device. That is, in step a) above, when the magnetic force value received by the second processor from the magnetic sensor is below a certain level and the magnetic force is invalid, the power of the cutting part 310 may remain turned off. Then, by performing the pipe selection method again, the pipe to be removed may be re-identified from the outside of the pipe through the pipe selection device. In this case, the process may return to the step of identifying the pipe to be removed from the outside among the plurality of pipes, which may be step A) of the pipe identification step of the present disclosure. That is, when the second processor confirms that the pipe where the cutting machine 300 is positioned to be cut is not the pipe to be removed 11, it may perform the method for identifying the pipe again, thereby identifying the pipe to be removed 11 again through the magnetic force measuring device 200.

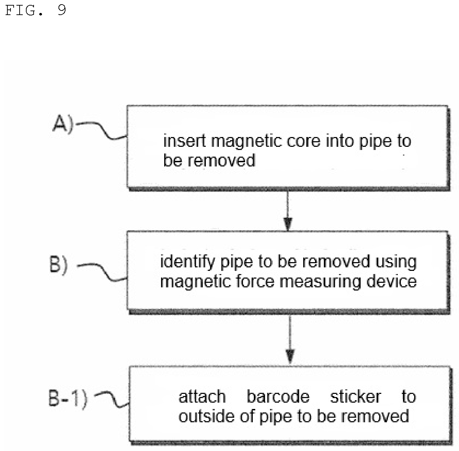

Thereafter, referring to FIG. 9, when the cutting machine confirms that the pipe to be removed, the power of the cutting part may be turned on by performing step b). Accordingly, when the cutting machine 300 finally confirms that the pipe where the cutting machine 300 is positioned is the pipe to be removed 11, the power of the cutting part 310 is turned on, and the preparation to cut the pipe through the cutting part 310 may be completed.

Then, the cutting part 310 with the power turned on may perform step c) of cutting the pipe to be removed 11. When the cutting machine 300 finally confirms the pipe to be removed 11, the pipe removal operation may be performed by cutting the pipe according to the removal plan using the cutting part 310. In this case, the cutting part 310 may simultaneously cut the pipe and the magnetic core 100 inserted inside the pipe. In addition, the cutting part 310 may cut the pipe and the magnetic core 100 together at a position where the central portion 110 is disposed, while avoiding the magnetic unit 120 of the magnetic core 100, according to a work plan confirmed through a barcode in step a-0). Then, data regarding the information on the pipe that has been removed may be transmitted and received externally using the second processor of the cutting part. The second processor described above may analyze the outer diameter select record and the data of the cutting machine 300, and may transmit a report of the completion of the work to the outside.

In an embodiment of the present disclosure, the magnetic force measuring device of the present disclosure is characterized as being the pipe-to-be-removed identification device 200 that identifies the pipe to be removed from the outside of the pipe.

The pipe-to-be-removed identification device 200 of the present disclosure is a device that may easily identify the pipe to be removed from the outside when removing a specific pipe in a pipe system having a plurality of pipes. In the present disclosure, the pipe-to-be-removed identification device 200 is characterized by detecting the magnetic force of the magnetic core 100 inserted inside the pipe to be removed 11, thereby enabling easy identification of the pipe to be removed.

Here, the magnetic core 100 inserted inside the pipe to be removed 11 may be composed of magnets having a specific magnetic force spaced apart at equal intervals on the wire. In this case, the length of the magnetic core may be determined by detecting the number of the arranged magnets. Furthermore, it is preferable that the magnets include a magnetic force such that they may be detected from the outside even when inserted inside the pipe. More specifically, it is preferable that the magnets have a specific magnetic force value that is distinct from the magnetic force detectable in other external environments. The magnet may be configured such that the N pole and the S pole are distinguished. Here, the polarities of the N pole and the S pole may be arranged vertically in the up-and-down direction relative to the wire. In this case, the polarity arrangement of the magnets may be random, or the magnets arranged along the length of the wire may have adjacent parts with the same pole or different poles arranged alternately, and this may be selected as needed. However, the strength of the magnetic force may change depending on the arrangement of the polarities. The magnet is preferably formed with a diameter less than or equal to that which may be inserted into the pipe 10, and may be formed integrally with the wire.

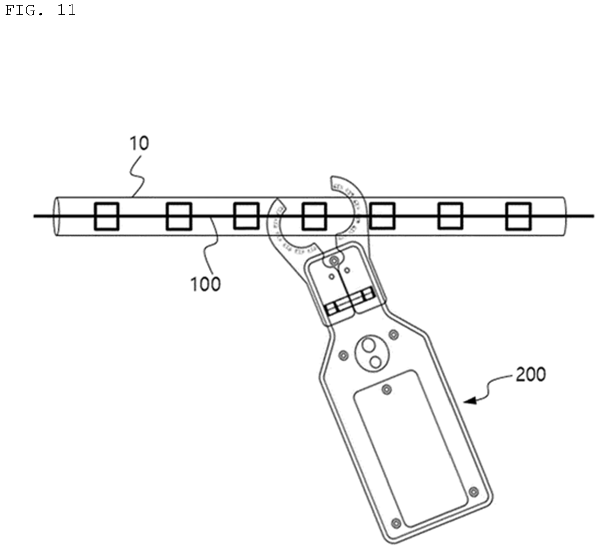

By inserting the magnetic core 100 having the above characteristics into the pipe to be removed 11, the pipe to be removed 11 may be distinguished from the plurality of pipes. Referring to FIG. 11, the pipe-to-be-removed identification device 200 of the present disclosure is characterized by detecting the magnetic force of the magnetic core 100 inserted into the pipe 10 from the outside of the pipe 10 to identify whether the pipe is the pipe to be removed.

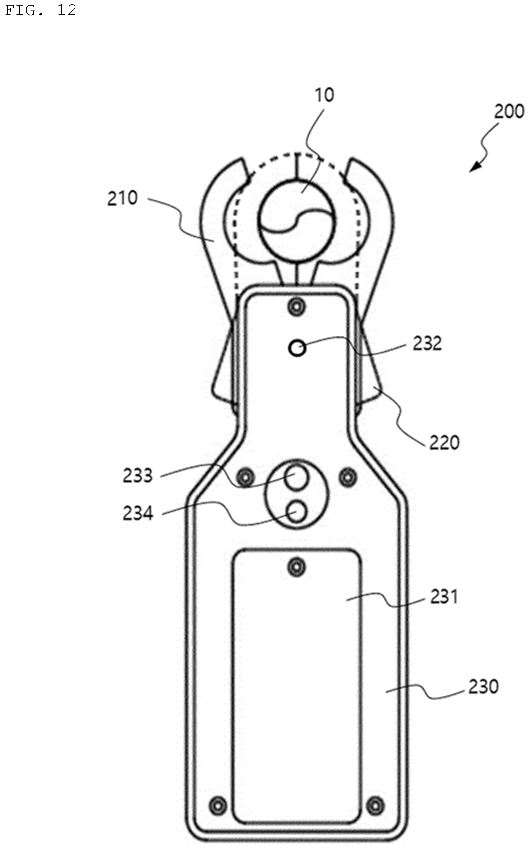

Referring to FIG. 12, the pipe-to-be-removed identification device 200 of the present disclosure may include a sensing unit 210 that is attached to the pipe 10 and is formed such that at least an inner circumferential surface corresponds to the outer circumferential surface of the pipe 10; an opening and closing means 220 for selectively opening or closing the sensing unit 210; and a body part 230 having the sensing unit 210 on one side. Here, the sensing unit 210 is characterized by having a plurality of magnetic sensors 213 that detect a specific magnetic force of the magnetic core 100 and are uniformly arranged along the inner circumferential surface.

In other words, as illustrated in FIG. 11, the pipe-to-be-removed identification device 200 of the present disclosure is characterized by being able to identify whether the pipe 10 is the pipe to be removed or not by attaching the sensing unit 210 positioned on one side of the body part 230 to the outside of a pipe 10 and detecting the magnetic force of the pipe 10 using the magnetic sensor 213 formed along the inner circumferential surface of the sensing unit 210.

The sensing unit 210 of the present disclosure may be formed in a ring shape in which the inner circumferential surface wraps around the outer circumferential surface of the pipe 10. Referring to FIGS. 12 to 14 for a more detailed description, the sensing unit 210 is characterized by having a circular shape in which the inner circumferential surface of the sensing unit 210 corresponds to the outer circumferential surface of the pipe 10, so that the inner circumferential surface of the sensing unit 210 contacts the outer circumferential surface of the pipe 10 and is secured. Here, the sensing unit 210 may have a shape in which a first sensing unit 211 and a second sensing unit 212, each formed in a semicircular shape to facilitate attachment to the pipe 10, are arranged facing each other. That is, it may have a clamp shape such that it may be mounted on the pipe 10 when the first sensing unit 211 and the second sensing unit 212 come into contact with each other, and may be detached from the pipe 10 when the first sensing unit 211 and the second sensing unit 212 are separated from each other.

In this case, it is preferable that the diameter of the inner circumferential surface of the sensing unit 210 corresponds to the diameter of the outer circumferential surface of the pipe 10 or is larger than the outer circumferential surface of the pipe 10. However, depending on the type or size of the pipe, the sensing unit 210 may be detachable from the body part 230. In other words, the sensing unit 210 may have various diameters and may be formed in multiple units, and may be configured to be usable in various pipes by replacing the sensing unit 210 from the body part 230 to match the diameter of the pipe 10 as needed.

The pipe-to-be-removed identification device 200 of the present disclosure is characterized by including the opening and closing means 220 for detaching the sensing unit 210 from the pipe 10. The opening and closing means 220 is characterized as a means for selectively opening or closing the sensing unit 210. That is, the opening and closing means 220 is characterized as being a means for opening and closing the first sensing unit 211 and the second sensing unit 212 in the sensing unit 210 composed of the first sensing unit 211 and the second sensing unit 212. Here, the opening and closing means 220 may be configured without limitation as long as it is a means capable of opening or closing the first sensing unit 211 and the second sensing unit 212.

Referring to FIGS. 12 to 14, in an embodiment, the opening and closing means 220 of the present disclosure is characterized by a clamp-type structure in which a handle 220 protruding by a predetermined size is formed on the body part 230, and the space between the first sensing unit 211 and the second sensing unit 212 opens by pressing the handle 220. The handle 220 may be positioned on one side of the body part 230 where the sensing unit 210 is formed, and it is preferable that the handle 220 is positioned on the other side of the sensing unit 210 rather than the sensing unit 210. The first sensing unit 211 and the second sensing unit 212 are closed to each other when the handle 220 is not pressed, and the space between the first sensing unit 211 and the second sensing unit 212 opens when the handle 220 is pressed. In this case, the handle 220 may be formed as a pair arranged at both ends parallel to the arrangement direction of the first sensing unit 211 and the second sensing unit 212, so that the handle 220 and the sensing unit 210 arranged on the same line form a pair, and when the handle 220 is pressed, the corresponding sensing unit 210 performs the operation of opening. Here, the opening and closing means 220 may further include a spring 221 between the pair of handles 220, such that the first sensing unit 211 and the second sensing unit 212 are opened when the handle 220 is pressed, and the first sensing unit 211 and the second sensing unit 212 are closed when the handle 220 is not pressed as the handle 220 returns to its original position by elasticity of the spring 221.

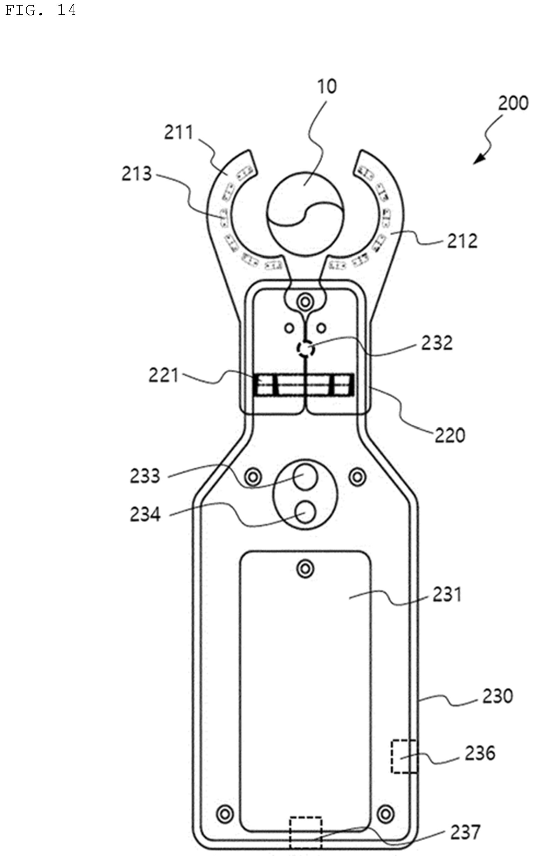

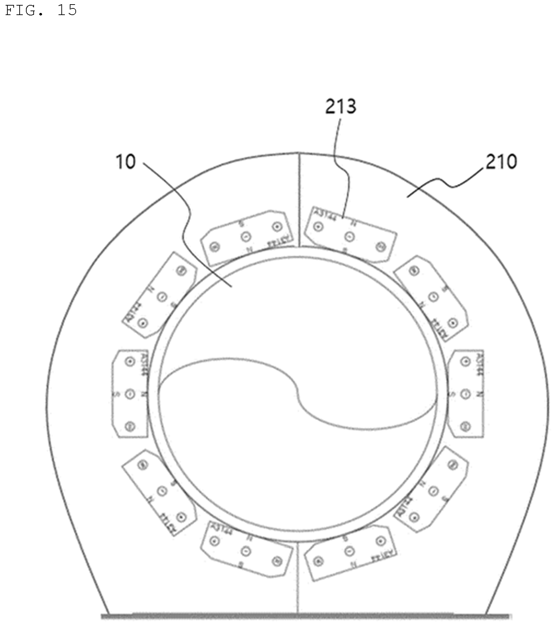

The pipe-to-be-removed identification device 200 of the present disclosure is characterized by detecting the magnetic force of the magnetic core 100 inserted inside the pipe 10 from the outside of the pipe 10. Accordingly, the pipe-to-be-removed identification device 200 is characterized by having the plurality of magnetic sensors 213 that detect the magnetic force of the magnetic core 100. Here, referring to FIGS. 14 and 15, it is preferable that the magnetic sensors 213 are arranged on the inner circumferential surface of the sensing unit 210 that contacts the outer circumferential surface of the pipe 10 among the sensing units 210. In other words, the plurality of magnetic sensors 213 that detect a specific magnetic force of the magnetic core 100 are arranged side by side along the inner circumferential surface of the sensing unit 210. Accordingly, the pipe-to-be-removed identification device 200 of the present disclosure has an advantage of enabling detection of magnetic force of the magnetic core 100 over an entire 360° range of the pipe 10. This is achieved by a structure in which the inner circumferential surface of the sensing unit 210 is formed in a circular shape to contact the outer circumferential surface of the pipe 10, and by arranging the magnetic sensor 213 along the inner circumferential surface of the sensing unit 210, thereby enabling more precise and accurate identification of the magnetic core 100.

Here, the magnetic sensor 213 of the present disclosure may be a hall sensor, and the hall sensor is characterized by being configured to distinguish between the N pole and the S pole. The magnetic core 100 inserted inside the pipe 10 also distinguishes between the N pole and the S pole, and in particular, the N pole and the S pole of the magnetic core 100 are arranged vertically along the up and down direction relative to the wire. The magnetic sensor 213 of the present disclosure is characterized in that a Hall sensor is included as a configuration for more accurately detecting magnetic force using the same, wherein the Hall sensor is configured such that the N pole and the S pole are distinguished.

And, referring to FIG. 15, the Hall sensor of the present disclosure includes the N pole and the S pole, in which the N pole and the S pole are arranged in parallel directions along the radial direction of the sensing unit 210. In other words, the N pole and the S pole of the Hall sensor are arranged in parallel directions along the radial direction from the sensing unit 210, such that each N pole and S pole are arranged in a parallel direction that is aligned with each other along the radial direction. Accordingly, with respect to the N pole and the S pole of the magnetic core 100 arranged vertically inside the pipe 10, the N pole and the S pole of each Hall sensor arranged around the inner circumferential surface of the sensing unit 210 may be in a direction perpendicular or parallel to each other depending on their position. Here, the magnetic sensors 213 arranged in parallel along the inner circumferential surface of the sensing unit 210 may be arranged alternately such that the poles of the adjacent magnetic sensors 213 are opposite to each other, that is, the poles arranged on the inner circumferential surface are N poles and S poles that are alternate to each other. Additionally, when necessary, the magnetic sensors 213 arranged in parallel along the inner circumferential surface of the sensing unit 210 may be arranged such that the poles of the adjacent magnetic sensors 213 are the same to each other, that is, the poles arranged on the inner circumferential surface are all the N pole or S pole.

It is preferable that the sensing unit 210 of the present disclosure be formed to move along the surface of a pipe 10 forming a length and to sense the magnetic force of the magnetic core 100 inserted inside the pipe 10. Accordingly, the sensing unit 210 may be configured with at least one material among plastics such as Teflon (PTFE), polyethylene (PE), polypropylene (PP), and polyacetal (POM), which have a low coefficient of friction, or nylon and glass fiber reinforced plastic (FRP), so that the inner circumferential surface of the sensing unit 210 may move and operate on the outer circumferential surface of the pipe 10. This is to provide the effect that the pipe-to-be-removed identification device 200 may easily move its position and operate even on a long pipe 10 by configuring the inner surface of the sensing unit 210 itself with a material that may slide on the outer circumferential surface of the pipe 10. In addition, the sensing unit 210 is characterized by having at least one roller or bearing arranged along the inner circumferential surface so that the sensing unit 210 may move and operate on the outer circumferential surface of the pipe 10. Here, the roller or bearing is preferably positioned in a direction protruding from the inner circumferential surface and formed to be movable along the outer circumferential surface of the pipe 10. In this case, the inner circumferential surface diameter of the sensing unit 210 is formed to be larger than the outer circumferential surface diameter of the pipe 10, so that the pipe-to-be-removed identification device 200 may easily move its position on the long pipe while the roller or bearing protruding from the inner circumferential surface of the sensing unit 210 is in contact with the outer circumferential surface of the pipe 10.

The body part 230 is a part that may not only be equipped with the sensing unit 210 and the opening and closing means 220, but also be equipped with other necessary functions. The body part 230 may also function as the handle 220 that allows an operator to grip the pipe-to-be-removed identification device 200. Accordingly, the body part 230 may have a predetermined length along one direction, and may be configured such that the sensing unit 210 and the opening and closing means 220 are positioned at one end. Additionally, it is preferable that the body part 230 have a predetermined thickness to make it easy for an operator to grip.

Referring to FIGS. 12 to 14, the body part 230 may further include various devices capable of performing additional functions required by the pipe-to-be-removed identification device 200, such as supplying power to the magnetic sensor 213 or displaying the detection result of the magnetic sensor 213. In an embodiment, as illustrated in FIG. 14, the body part 230 may be equipped with a battery 231 that supplies power to the pipe-to-be-removed identification device 200 including the magnetic sensor 213. Additionally, as illustrated in FIG. 12, the body part 230 may include an identification means 232 that outputs the result of the determination as a colored indicator light or a buzzer when determining whether the magnetic force detected by the magnetic sensor 213 is the magnetic force of the magnetic core 100 inserted inside the pipe to be removed 11. Additionally, as illustrated in FIG. 14, the body part 230 may further include a connection part that is wired to and interlocked with other devices. The connection part is capable of connecting the pipe-to-be-removed identification device 200 to other devices via a wire, and the body part 230 may be provided with a connector for connecting necessary wires or cables as needed. Here, the connection part of the present disclosure may include a motor connection part 237 connected to a motor 420 of the magnetic core 100 supply device that supplies the magnetic core 100 to the body part 230, and a cutting machine connection part 236 connected to the cutting machine 300 that cuts the pipe 10. The body part 230 may further be provided with wireless communication so that it may wirelessly connect with external devices to transmit and receive signals to and from each other. In addition, the body part 230 may be equipped with various devices according to the functions required by the pipe-to-be-removed identification device 200.

The pipe-to-be-removed identification device 200 of the present disclosure may be used in an insertion step or a removal step in which the magnetic core is inserted into the target pipe 11 using the pipe-to-be-removed identification device 200. Accordingly, the pipe-to-be-removed identification device 200 is connected to the cutting machine 300 that cuts the pipe to be removed 11 to transmit and receive signals, and by the cutting machine 300 operating in conjunction with the pipe-to-be-removed identification device 200, the effect of preventing erroneous cutting accidents during the target pipe removal operation is achieved.

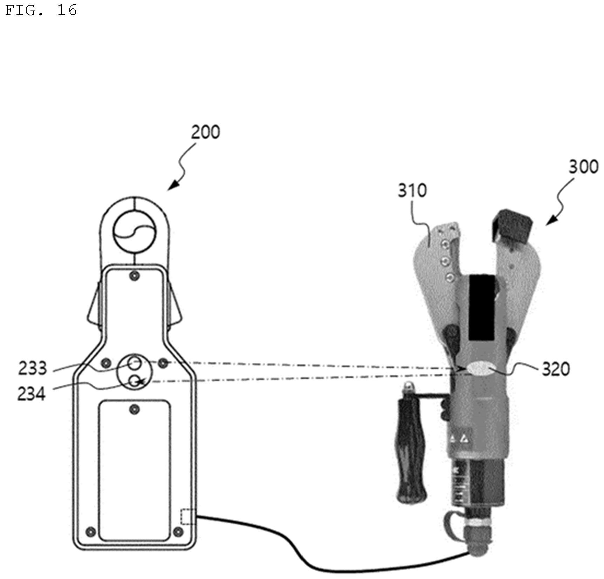

Referring to FIG. 16 for a more detailed description, the cutting machine 300 formed with a cutting blade 310 for cutting the pipe 10 in the present disclosure receives an operation signal, and the cutting machine 300 should be turned on for the cutting blade 310 to operate and cut the pipe 10. That is, when the cutting machine 300 of the present disclosure does not receive an operation signal, the cutting blade 310 does not operate and may not cut the pipe 10. Here, the cutting machine 300 of the present disclosure is characterized by being able to receive a signal from the pipe-to-be-removed identification device 200 regarding the operation signal that the cutting blade 310 operates. To this end, the cutting machine 300 may be connected to the pipe-to-be-removed identification device 200 to transmit and receive signals to and from each other, and in an embodiment, may be connected to the cutting machine 300 via a wire through the cutting machine connection part 236 formed in the body part 230 of the pipe-to-be-removed identification device 200. When the pipe-to-be-removed identification device 200 detects a specific magnetic force on the magnetic core 100 inserted into the pipe 10, it identifies that the pipe is the pipe to be removed, and the pipe-to-be-removed identification device 200 may transmit an operation signal to the cutting machine 300 via a wire. Accordingly, the cutting machine 300 is turned on by the operation signal received from the pipe-to-be-removed identification device 200, and the cutting blade 310 operates to cut the pipe 10.

Here, as illustrated in FIG. 16, a specific laser emitted from the pipe-to-be-removed identification device 200 is reflected from the cutting machine to the identification device, thereby allowing the positions of each other to be confirmed. To describe in more detail, the body part 230 of the pipe-to-be-removed identification device 200 may have a laser sensor 233 capable of emitting a laser and a laser detection sensor 234 for detecting the laser sensor 233 from the outside arranged near the laser sensor 233. Additionally, the cutting machine 300 may further include a reflector 320 capable of reflecting the laser emitted by the laser sensor 233. Accordingly, when the magnetic sensor 213 of the pipe-to-be-removed identification device 200 senses the magnetic force of the magnetic core and confirms that the corresponding pipe is the pipe to be removed 11, the laser sensor 233 emits a laser, and the pipe-to-be-removed identification device 200 and the cutting machine 300 are positioned side by side and adjusted so as to face each other with a reflector 320 of the cutting machine 300, whereby the positions of the pipe-to-be-removed identification device 200 and the cutting machine 300 may be mutually identified using the laser. When the reflector 320 of the cutting machine 300 reflects the laser emitted from the laser sensor 233, and the reflected laser is received by the laser detection sensor 234 positioned near the laser sensor 233 of the pipe-to-be-removed identification device 200, the pipe-to-be-removed identification device 200 determines that the cutting machine 300 is positioned at the pipe to be removed 11. The pipe-to-be-removed identification device 200 then transmits an operation signal to the cutting machine 300, and the cutting machine 300 receiving the operation signal is turned on, so that the cutting blade 310 is operable. Additionally, the pipe-to-be-removed identification device 200 generates positional information and transmits the positional information to the cutting machine 300, and when the cutting machine 300 feeds back the positional information received from the pipe-to-be-removed identification device 200, the cutting machine 300 is turned on and the cutting blade 310 may operate.

Additionally, the pipe-to-be-removed identification device 200 of the present disclosure may be used in an insertion step in which the magnetic core 100 is inserted into the pipe to be removed 11 using the pipe-to-be-removed identification device 200. The pipe-to-be-removed identification device 200 is coupled to the motor 420 of the magnetic core insertion device 400 that inserts the magnetic core 100 into the pipe to be removed 11 so as to transmit and receive signals to and from each other, and detects the length of the magnetic core 100 inserted into the pipe 10 using the magnetic sensor 213 of the pipe-to-be-removed identification device 200, thereby having the effect of being able to insert the necessary amount of magnetic core 100 into the pipe to be removed 11 during the insertion step.

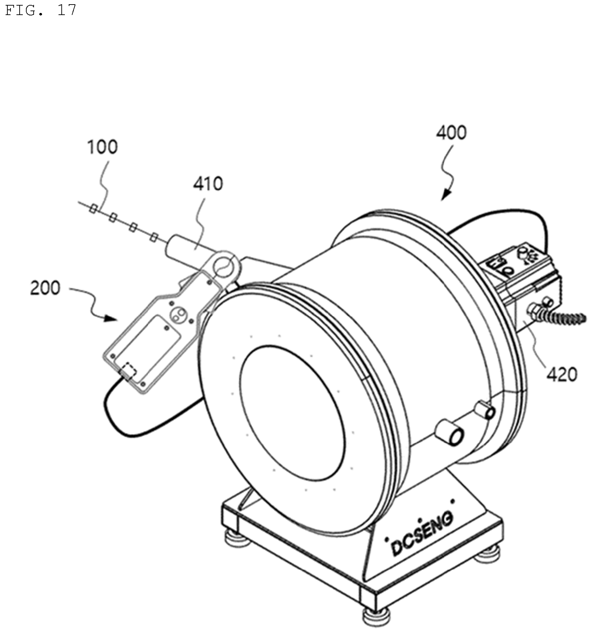

Referring to FIG. 17 for a more detailed description, a magnetic core insertion device 400 for inserting the magnetic core 100 into the pipe 10 for the pipe to be removed 11 includes an outlet 410 for withdrawing the magnetic core 100 on one side. Accordingly, the magnetic core 100 is withdrawn along one direction through the outlet 410 and inserted into the pipe 10. Here, the pipe-to-be-removed identification device 200 of the present disclosure may be mounted on the outlet 410 of the magnetic core insertion device 400. That is, the sensing unit 210 of the pipe-to-be-removed identification device 200 may be attached to the outlet 410 of the magnetic core insertion device 400 while wrapping around the outer circumferential surface of the outlet 410. In addition, the pipe-to-be-removed identification device 200 is characterized by being able to determine the length of the magnetic core 100 by detecting the magnetic force of the magnetic core 100 passing through the outlet 410 using the magnetic sensor 213, thereby allowing the length of the magnetic core 100 inserted into the target pipe 11 to be known.

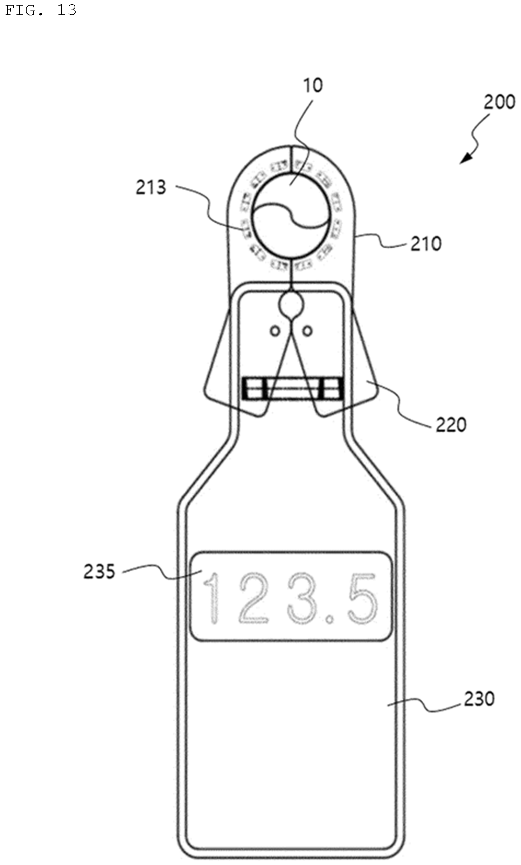

Here, as illustrated in FIG. 13, the pipe-to-be-removed identification device 200 may further include a display 235 on the body part 230 that may output characters or numbers, etc., externally. In addition, the supply length of the magnetic core 100 detected by the magnetic sensor 213 of the pipe-to-be-removed identification device 200 may be output through the display 235. Additionally, the magnetic core insertion device 400 may be connected to the pipe-to-be-removed identification device 200 to transmit and receive signals to and from each other, and as illustrated in FIG. 17, in an embodiment, it may be connected to a motor 420 that extracts the magnetic core 100 from within the magnetic core insertion device 400 via a wire through a motor connection part 237 formed in the body part 230 of the pipe-to-be-removed identification device 200.

The pipe-to-be-removed identification device 200 is connected to the motor 420 of the magnetic core insertion device 400, so that the pipe-to-be-removed identification device 200 may control the power of the motor 420 as needed. Accordingly, in the insertion step, the pipe-to-be-removed identification device 200 is connected to the outlet 410 of the magnetic core insertion device 400, and the pipe-to-be-removed identification device 200 senses the length of the magnetic core 100 being withdrawn from the outlet 410 and may display the length of the supplied magnetic core 100 through the display 235. An operator may know in advance the insertion length of the magnetic core 100 to be inserted according to the length of the pipe to be removed 11, or the corresponding length may be preset in the pipe-to-be-removed identification device 200. When the length of the magnetic core 100 detected by the magnetic sensor 213 reaches the preset length, the motor 420 linked to the pipe-to-be-removed identification device 200 is controlled to stop power supply, thereby stopping the insertion of the magnetic core 100 into the pipe.

Additionally, when the magnetic core insertion device 400 inserts the magnetic core 100 into the pipe through the outlet 410, the compressed air may be supplied along the direction of movement of the magnetic core 100 through the outlet 410 to provide pulling force to the magnetic core 100. Here, the compressed air may be ejected outward along the outlet 410 formed on one side together with the magnetic core 100 by the compressed air supplied into the housing of the magnetic core insertion device 400. Here, the magnetic core insertion device 400 may be linked to control the supply of compressed air supplied to the magnetic core insertion device 400. Accordingly, in the insertion step, the pipe-to-be-removed identification device 200 is connected to the outlet 410 of the magnetic core insertion device 400, and the pipe-to-be-removed identification device 200 senses the length of the magnetic core 100 being withdrawn from the outlet 410 and may display the length of the supplied magnetic core 100 through the display 235. An operator may know in advance the insertion length of the magnetic core 100 to be inserted according to the length of the pipe to be removed 11, or the corresponding length may be preset in the pipe-to-be-removed identification device 200. When the length of the magnetic core 100 detected by the magnetic sensor 213 reaches the preset length, the compressed air linked to the pipe-to-be-removed identification device 200 is controlled to stop the insertion of the magnetic core 100 into the pipe.

Hereinabove, although the present invention has been described by specific matters such as detailed components, exemplary embodiments, and the accompanying drawings, they have been provided only for assisting in the entire understanding of the present invention. Therefore, the present invention is not limited to the exemplary embodiments. Various modifications and changes may be made by those skilled in the art to which the present invention pertains from this description.

Therefore, the spirit of the present invention should not be limited to these exemplary embodiments, but the claims and all of modifications equal or equivalent to the claims are intended to fall within the scope and spirit of the present invention.

**[Description of Reference Signs]**

| | | | |
|---|---|---|---|
| 10: | Pipe | 11: | Pipe to be removed |
| 100: | Magnetic core | 101: | Guide line |
| 110: | Central portion | 120: | Magnetic unit |
| 121: | Horizontal magnetic unit | 122: | Vertical magnetic unit |
| 130: | Spacing unit | | |
| 200: | Pipe-to-be-removed identification device | | |
| 210: | Sensing unit | 220: | Opening and closing means |
| 230: | Body part | | |
| 300: | Cutting machine | | |
| 310: | Cutting blade | 320: | Reflector |
| 400: | Magnetic core insertion device | | |
| 410: | Outlet | 420: | Motor |

## Claims

1. A pipe selection method for identifying and selecting a pipe to be removed from among a plurality of pipes from an outside, the pipe selection method comprising:
A) separating front and rear ends of the pipe to be removed and inserting a magnetic core into the pipe to be removed; and
B) identifying the pipe to be removed by measuring a magnetic force of the pipe from the outside using a magnetic force measuring device that senses the magnetic force, and
a pipe removal method for the pipe to be removed selected by the pipe selection method, the pipe removal method comprising:
a) confirming the pipe to be removed by sensing the magnetic force of the pipe and confirming the magnetic core using a cutting machine including a cutting part arranged at one end to cut the pipe and a magnetic sensor arranged on the cutting part side to measure the magnetic force;
b) when the magnetic force sensed by the cutting machine is valid, turning on power to the cutting part of the cutting machine that cuts the pipe; and
c) cutting, by the cutting part, the pipe to be removed,
wherein the cutting machine is initially set to an off state such that the cutting part is not operated, and when it is sensed that a magnetic force value sensed by the magnetic sensor is equal to or greater than a predetermined level, the cutting part is switched to an on state and the cutting part is operated.

2. The pipe selection method and pipe removal method of claim 1, further comprising:
B-1) when the pipe to be removed is identified in B), storing corresponding pipe information in the magnetic force measuring device, generating a barcode corresponding to the stored pipe information and printing the barcode as a sticker, and then attaching the sticker to the pipe to be removed.

3. The pipe selection method and pipe removal method of claim 1, wherein, in A), the magnetic core is inserted by connecting a guide line to one end portion of the magnetic core and using a wire feeder to insert the guide line into a pipe to be removed and pull the magnetic core.

4. The pipe selection method and pipe removal method of claim 1, wherein, in A), the magnetic core feeder that includes an elastic pig ball formed to have a diameter corresponding to an inner diameter of the pipe and a guide line connected to the magnetic core coupled to a rear end of the pig ball is inserted from one end of the pipe, and a compressed fluid is supplied from the one end of the pipe so that the pig ball moves along the pipe and then the guide line connected to the pig ball pulls the magnetic core, thereby inserting the magnetic core into the pipe.

5. The pipe selection method and pipe removal method of claim 1, wherein, in a), when the magnetic force sensed by the cutting machine is not valid, the pipe to be removed is identified using a magnetic force measuring device on the outside of the pipe.

6. The pipe selection method and pipe removal method of claim 5, wherein, in a), when the sensed magnetic force value of the magnetic sensor is less than a certain level, the power of the cutting part remains turned off.

7. The pipe selection method and pipe removal method of claim 1, further comprising:
a-0), prior to a), recognizing, by a scanner, a barcode of a sticker attached to the outside of the pipe to be removed, and confirming information on the pipe to be removed..

8. The pipe selection method and pipe removal method of claim 7, wherein, in a-0),
when the barcode information recognized by the scanner and the information on the pipe to be removed are valid, a) is performed, and
when the barcode information recognized by the scanner and the information on the pipe to be removed are invalid, re-selecting the pipe to be removed from the outside is performed.

9. The pipe selection method and pipe removal method of claim 1, wherein the magnetic core includes:
a central portion that forms a length according to at least the length of the pipe; and
a plurality of magnetic units that have a predetermined length and are coupled to an outer diameter of the central portion, and
the plurality of magnetic units are spaced apart at a predetermined interval on the central portion.

10. The pipe selection method and pipe removal method of claim 1, wherein the pipe-to-be-removed identification device includes:
a probe that measures the magnetic force of the magnetic core from the outside of the pipe; and
a first processor that converts the magnetic force measured by the probe into data, stores and manages the data, and generates the data into a barcode.

11. The pipe selection method and pipe removal method of claim 1, wherein the cutting machine further includes:
a scanner that scans a barcode; and a second processor that converts the magnetic force measured by the magnetic sensor and the information on the barcode scanned by the scanner into data, stores and manages the data, and compares and determines the received information.

12. A pipe-to-be-removed identification device that senses a magnetic force of a magnetic core inserted into a pipe to be removed and identifies the pipe to be removed from the outside, the pipe-to-be-removed identification device comprising:
a sensing unit that is arranged at one end and formed such that at least an inner circumferential surface corresponds to an outer circumferential surface of the pipe and is fastened to the pipe;
an opening and closing means that selectively opens or closes the sensing unit; and
a body part having the sensing unit on one side,
wherein the sensing unit is provided with a plurality of magnetic sensors that sense a specific magnetic force of the magnetic core and are arranged in parallel along an inner circumferential surface.

13. The pipe-to-be-removed identification device of claim 12, wherein the sensing unit includes a first sensing unit and a second sensing unit each having an inner circumferential surface formed as a semicircle and arranged facing each other, and the inner circumferential surface is formed in a circular shape along an outer circumferential surface of the pipe.

14. The pipe-to-be-removed identification device of claim 13, wherein the opening and closing means are a clamp type that opens or closes the space between the first sensing unit and the second sensing unit by pressing or not pressing a handle that protrudes a predetermined distance from the body part.

15. The pipe-to-be-removed identification device of claim 12, wherein the sensing unit is replaceable from the body part.

16. The pipe-to-be-removed identification device of claim 12, wherein the magnetic sensor includes a Hall sensor with a north pole and a south pole, and
the north pole and the south pole are arranged parallel to each other along a radial direction of the sensing unit.

17. The pipe-to-be-removed identification device of claim 16, wherein the plurality of magnetic sensors is arranged such that the north pole and the south pole alternately are arranged on an inner circumferential surface side of the sensing unit.

18. The pipe-to-be-removed identification device of claim 12, wherein the sensing unit is configured to have an inner circumferential surface made of at least one material having a low coefficient of friction among Teflon (PTFE), plastic, nylon, and glass fiber reinforced plastic (FRP), so that the sensing unit moves along the outer circumferential surface of the pipe.

19. The pipe-to-be-removed identification device of claim 12, wherein the sensing unit has at least one roller or bearing arranged along the inner circumferential surface so that the sensing unit moves on the outer circumferential surface of the pipe.

20. A target pipe removal method using the pipe-to-be-removed identification device of claim 12, wherein the pipe-to-be-removed identification device is connected to a cutting machine that cuts the pipe to be removed so as to transmit and receive a signal, and
when the magnetic sensor of the pipe-to-be-removed identification device senses the pipe to be removed, the the pipe-to-be-removed identification device transmits an operation signal to the cutting machine so that the cutting machine is turned on.

21. A target pipe removal method using the pipe-to-be-removed identification device of claim 12, wherein the pipe-to-be-removed identification device is connected to a cutting machine that cuts the pipe to be removed so as to transmit and receive a signal, and
the pipe-to-be-removed identification device generates positional information and transmits the positional information to the cutting machine, and when the cutting machine feeds back the positional information received from the pipe-to-be-removed identification device, the cutting machine is turned on.

22. A magnetic core insertion method using the pipe-to-be-removed identification device of claim 12, wherein the pipe-to-be-removed identification device is linked to a motor of a magnetic core insertion device that inserts a magnetic core into the pipe to be removed, and
when a sensing unit of the pipe-to-be-removed identification device is installed at an outlet of the magnetic core insertion device through which the magnetic core is extracted, the magnetic sensor senses a magnetic force of the magnetic core extracted from the outlet and calculates a length of the magnetic core.

23. The magnetic core insertion method of claim 22, wherein the pipe-to-be-removed identification device includes a display in the body part that outputs the length of the magnetic core to the outside, and
when an insertion length of the magnetic core output to the display reaches a preset length, a motor power of the magnetic core insertion device is stopped.
